Europäisches Patentamt

**European Patent Office**

**Office européen des brevets**

(11) Publication number: **0 029 818**
**A2**

# (12) EUROPEAN PATENT APPLICATION

(21) Application number: **80850175.3**

(22) Date of filing: **21.11.80**

(51) Int. Cl.³: **F 24 D 3/00**

(30) Priority: **21.11.79 SE 7909630**

(43) Date of publication of application:
**03.06.81 Bulletin 81/22**

(84) Designated Contracting States:
**BE CH DE FR GB LI NL**

(71) Applicant: **Kullberg, Bengt**
**Storövägen 20**
**S-141 42 Huddinge(SE)**

(72) Inventor: **Kullberg, Bengt**
**Storövägen 20**
**S-141 42 Huddinge(SE)**

(74) Representative: **FORSHEDEN, Jarl**
**L.A. Groth & Co. AB Västmannagatan 43**
**S-113 25 Stockholm(SE)**

(54) **Arrangement in floors.**

(57) An arrangement in floors of the kind which, under a load-carrying floor layer, are provided with heating means in the form of pipes, which are flowed through by a heating medium. A sub-floor of heat-insulating slabs has upwardly open channels (4) for the pipes (2). At two mutually opposing walls, the pipes (2) are removably connected to distribution and collecting heads (6) which are placed in recesses (5) in the load-carrying floor layer (1). Above these heads (6) the load-carrying floor layer (1) is formed as removable or openable boards or hatches. The pipes (1) are of the soft kind, so that they are sufficiently flexible to be pulled out from, and pushed in to the channels (4) via openings which are exposed by means of the boards or hatches (8).

Fig. 1

Croydon Printing Company Ltd.

1

DESCRIPTION

Arrangement in Floors

Technical Field

The invention relates to an arrangement in floor of the kind which under a load-carrying layer of boards or panels, is provided with heating means in the form of pipes, adapted for having a heating medium in the vapour or liquid phase flowing through them.

Background Art

Previously known floors which are heated by means of pipes, through which a heating medium flows, generally have their pipes laid in concrete in the form of repeatedly S-bent coils or serpentines. Such coils have also been laid in sand beds under so-called floating floors, and it has also occurred that the coils have been freely arranged under a floor on studs. Floors with the pipes laid in concrete or sand are slower to regulate than is desired, and all the previously known floor types result in fairly uneven temperature distribution over the floor surface. If the heating medium leaks as a result of damage to some pipe coil, the whole floor, or large portions thereof, must be broken up to localize the leak and to make the necessary repairs, after which a new floor must be laid either completely or partially. Possible leakage thus generally leads to very extensive and expensive work.

Disclosure of Invention

The object of the invention is therefore to provide a means of the kind described in the introduction, the pipe system of which can be easily repaired by exchanging damaged pipe sections, after work on the floor of small destructiveness or extent.

The desired result is obtained by the arrangement being given the characterizing features apparent from the following patent claim 1.

Brief Description of Drawings

Some embodiments of the invention are described in detail in the following while referring to the appended drawings.

2/

Figure 1 is a partial view of the arrangement in accordance with the invention, seen from above with the whole of the load carrying floor layer removed.

Figure 2 illustrates to a larger scale a vertical section according to II-II in Figure 1.

Figure 3 similarly illustrates to a larger scale a vertical section along the line III-III in Figure 1.

Figure 4 also shows to a larger scale a vertical partial section according to IV-IV in Figure 1, supplemented by a load-carrying floor layer of panels (not shown in Figure 1) which is covered by a carpet.

Figures 5 and 6 show to an even larger scale a vertical partial section according to V-V in Figure 1, supplemented by a metal foil layer not shown in Figure 1.

Mode for Carrying Out the Invention

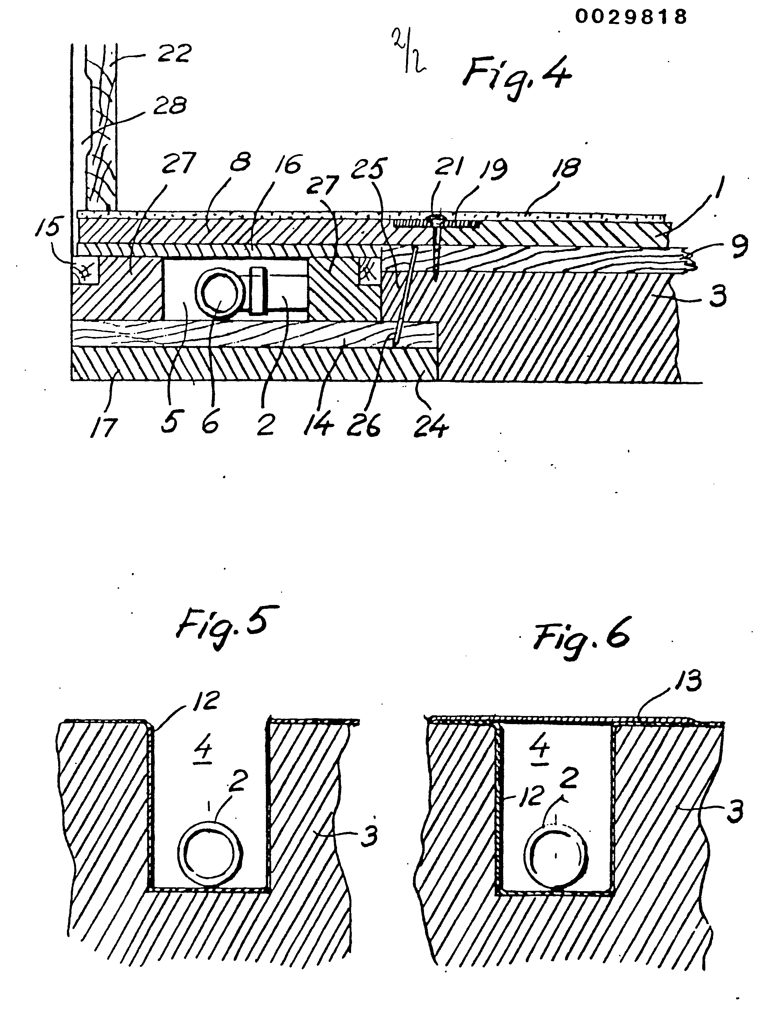

The arrangement is applicable to floors of the kind which are provided with heating means in the form of pipes 2 under a load-carrying floor layer 1 (Figure 4) of boards or panels, said pipes being adapted for flowing through by a heating medium in the vapour or liquid phase.

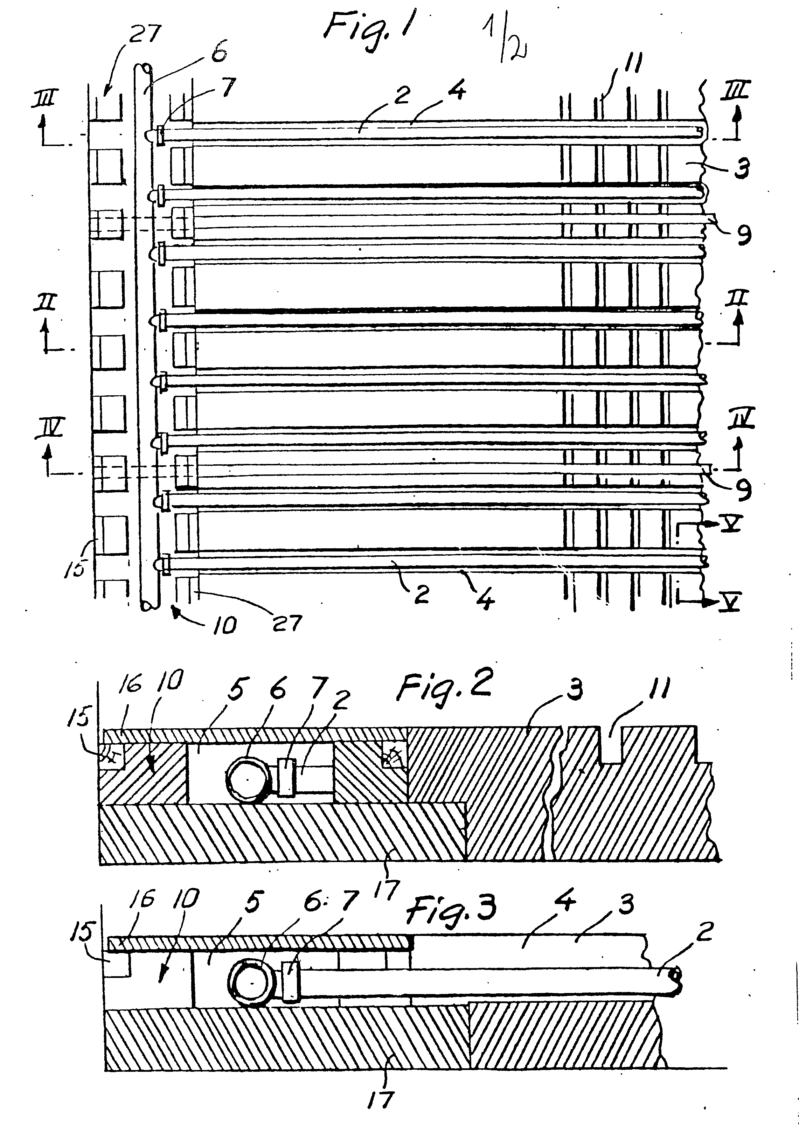

The arrangement has a sub-floor of heat-insulating slabs 3, the word "slabs" also intended to signify here members with a thickness in relation to their other two chief dimensions such that they have the character of blocks. These slabs are formed with upwardly open channels 4 for the pipes 2. Along two opposing walls of the room the slab floor is provided with recesses 5 running along each of these walls. Figures 1-3 show the recess 5 at one wall. The arrangement of a corresponding recess along the other wall is thus also a prerequisite. Distribution and collection heads 6 for the pipes 2 are arranged in the recesses 5. If the head 6 illustrated in Figure 1 is assumed to be a distribution head, the head (not shown) at the opposing wall is a collection head, and vice versa. The pipes 2 thus run connected in parallel between these heads and each pipe is removably connected to the head by means of connectors 7 adjacent each head 6.

3

The load-carrying floor layer 1 in the area of each recess 5 is made with removable or openable boards or panels 8 (Figure 4). The simple arrangement of openings is thus enabled along both the opposing walls, whereby the recesses 5 and the distribution and collection heads 6 are completely laid open.

The pipes 2 are of the soft kind, e.g. soft pipes with the trade name "Wirsbo-PEX" and so flexible that they can be pulled out of the channels 4 as well as being pushed into said channels, via the openings just mentioned, which have been afforded by the boards or panels 8 being removed or opened. If there is damage to some pipe 2, it can thus be dismantled and replaced by a new one without the floor needing to be broken up in the area of the damage.

The heat-insulating slabs 3 suitably constitute cellular plastic slabs known per se, with let-in nailing battons 9 (Figures 1 and 4) on their upper sides for attaching the floor layer 1 (see Swedish Patent specification 73 17276-9). As is apparent from Figure 1, channels 4 for the pipes 2 have been made in slabs of this kind, the channels being parallel to the nailing battons 9, while the recesses 5 for the distribution and collection heads 6 are oriented substantially at right angles to the channels 4 in separate cellular plastic slabs 10.

In comparison with a pipe coil which runs conventionally in the floor with repeated S-bends, the pipes 2, connected in parallel offer a generally more even temperature distribution over the floor surface. In order to provide further temperature equilization within part surfaces of the floor, it is suitable to make the sub-floor slabs 3 with a plurality of upwardly open grooves 11, crossing the channels 4 and arranged in all such areas of the slabs through which the channels 4 extend. For the sake of simplicity however, these grooves 11 have only been set out on the drawings in Figures 1 and 2 within a minor section of the sub-floor. These grooves can have a certain equilizing effect by serving as air ducts for heat transport by convection, but can also be filled with a material with substantially better heat conductivity than the material in the heat-insulating slabs 3. The filling (not shown) can to advantage constitute a granular material, e.g. sand, and a binder, e.g. waterglass.

With the same aim, the channels 4 can be clad with a material having good heat conductivity and preferably good radiation absorbing capacity, e.g. a mat black metal foil 12, following the bottom and side walls of the channel, and possibly extending a distance out over the upper side of the sub-floor 3 on either side of the channel 4, as illustrated in Figure 5. The foil 12 can to advantage be laid out over substantially the whole of the surface of the sub-floor, e.g. extending between the nailing battons 9, but not covering them, with regard to possible glueing of the floor layer 1 to the battons.

Alternatively or even additionally, the ducts 4 can be covered by foils 13 having good heat conductivity, as illustrated in Figure 6, e.g. aluminium foil, which are laid out on the upper side of the sub-floor. The foil 13 and/or the foil 12 suitably extend a good distance out on either side of the channel it covers, or substantially over the whole of the floor surface. At least the part of it exposed to the pipe 2 can be made with good radiation-absorbing capacity.

Further to contributing to better heat distribution, the foil 12 has the task of carrying the pipes 2 and affords less friction than the cellular plastics in the slab 3, for example, whereby the movement of the pipe 2, resulting from expansion and contraction in response to temperature changes on regulation of the heat supply, can be taken up without disturbing noise occurring. To advantage, the bottoms of the recesses 5 can therefore also be clad with foil, since the heads 6 must be able to glide in all directions in the bottom plane. For a possible leakage in a pipe 2, the foil 12 also serves to lead leaking heating medium out to the recesses 5, in which moisture detectors (not shown, see the Swedish Patent specification 7602561-8) are adapted as leak indicators.

Figures 2 and 3 illustrate how the separate slabs 10 for the recesses 5 can be suitably formed for joining to the other slabs 3, a nailing batton 14 let into the slab 10 together with a tongue 24 of the slab 10 extends in under a tongue 25 of the slab 3, so that the nailing battons 9 and 14 are situated opposite each other and can take up through-going nails 26 for mutual fixation of the slabs. Battons 15 oriented along the wall are arranged in the slabs 10 for removable attachment of the boards or panels 8 (Figure 4), e.g. by means of screws. The separate slabs 10 are composed of a bottom slab 17 with nailing batton 14, and on this slab there are arranged rows of blocks 27 along the edges of the slab. The battons 15, and similar battons for possible attachment of an extra board 16, are arranged in the block 27. In Figures 2-4 it is shown how this extra board 16 is arranged recessed as reinforcement to carry boards which could have a length joint (not shown) situated above the recess 5.

Both rows of blocks 27 are arranged with spacing which, with reference to the inner row, affords space for the passage of the pipes 2 into the recess 5. The outer row has corresponding spacing, which thereby serves as passages for airing the spaces 11, 4 and 5 in the sub-floor via a gap 28 between the wall of the room and the slab 16, floor panel 8, a carpet 18 and skirting board 22 (see also Figures 3 and 4). Moisture variations, e.g. as a result of temperature changes, are smoothed out by the airing.

Figure 4 furthermore illustrates how a floor panel forms the upwardly swingable hatch 8 for exposing the recess 5, for a floor layer 1 comprising floor panel with said carpet 18 (which is wall-to-wall) glued to the panels. A strip 19 recessed in the floor panels runs under the carpet 18 over the joint between the panel forming the hatch 8 and the adjacent one of the other panels. The strip is screwed into the nailing battons 9 of the sub-floor by means of screws 21, which have their heads situated under the carpet. When required, the hatch can be opened by removing the skirting board 22, some of the screws (not shown) in the vicinity of the wall and the screws 21 of the strip, the carpet then serving as a hinge, due to the action of the strip. Holes for the screws are made in the carpet.

CLAIMS

1.      Arrangement in floors of the kind which, under a load-carrying floor layer (1) of boards or panels, is provided with heating means in the form of pipes (2) adapted for having a heating medium in the vapour or liquid phase flowing through them, characterized in that a sub-floor (3) of heat-insulating slabs is formed with upwardly open channels (4) for the pipes; that along two opposing walls adjacent which the pipes are removably connected to distribution and collection heads (6), the sub-floor has recesses (5) running along these walls at an angle to the channels (4) for the distribution and collection heads, the load-carrying floor layer (1) in the area of the recesses (5) being formed with removable or openable boards or hatches (8); and in that the pipes (2) are of the soft kind, so that they are sufficiently flexible to be pulled out from, and thrust into the channels (4) via openings exposed by means of said boards or hatchets (8).

2.      Arrangement as claimed in claim 1, characterized in that the heat-insulating slabs (3) comprise cellular plastic slabs with let-in nailing battons (9) on their upper sides for attaching said floor layer (1), the channels (4) for the pipes (2) being substantially parallel to the nailing battons (9), and in that the recesses (5) for the distribution and collection heads (6) are substantially at right angles to the channels (4), and are consiged to separat cellular plastics slabs (10).

3.      Arrangement as claimed in claim 1 or 2, characterized in that the heat-insulating slabs (3) have separate, outwardly open grooves (11) crossing the channels (4) for the pipes (2) in the portions of said slabs (3) passed through by the pipes.

4.      Arrangement as claimed in claim 3, characterized in that the grooves (11) are filled with a material with better heat conductivity than the material in the heat-insulating slabs, e.g. a granular material and a binder.

2

5. Arrangement as claimed in any of claims 1 - 4, characterized in that the channels (4) are clad with a foil (12) having good heat conductivity and preferably good radiation absorbing capacity also, following the bottom and side walls of the channel and preferably extending out over the upper side of the heat-insulating slabs (3) on either side of the respective channel (4).

6. Arrangement as claimed in any of claims 1 - 5, characterized in that the channels (4) are covered by foils (13) with good heat conductivity, which are laid out on the upper side of the heat-insulating slabs (3) said foils preferably having good radiation absorbing capacity.

7. Arrangement as claimed in any of claims 1 - 6, for the case where the load-carrying floor layer (1) comprises boards and is covered by a wall-to-wall carpet (18), characterized in that a strip (19) let into the boards runs under the carpet (18), over the respective joint between the boards made as an openable hatch (8) in the area of the recesses (5) for the distribution and collection heads (6) on the one hand, and the remaining boards in the load-carrying floor layer (1) on the other hand, this strip (19) being screwed into the heat-insulating slabs (3) by means of screws (21), the heads of which are preferably situated under the carpet (18).

0029818

Fig. 1    1/2

Fig. 2

Fig. 3

0029818

2/2

Fig.4

Fig.5

Fig.6